# FASCICULE DE BREVET EUROPEEN

(11) **EP 1 348 614 B1**
(45) Date de publication et mention de la délivrance du brevet: **03.05.2006**
(21) Numéro de dépôt: 03006056.0
(22) Date de dépôt: 19.03.2003
(51) Int. Cl.: B62D 65/00, B60S 1/04

(54) **Procédé d'assemblage d'un module d'equipement et d'un élément d'habillage de véhicule automobile et agencement pour un tel assemblage**
Montageverfahren für ein Kraftfahrzeug-Ausstattungsmodul und ein Karrosserieteil, und Anordnung für eine derartige Montage
Mounting method for a vehicle equipment module and body part and arrangement for such a mounting

(30) Priorité: 27.03.2002 FR 0203861
(43) Date de publication de la demande: 01.10.2003
(73) Titulaire: VALEO SYSTEMES D'ESSUYAGE, 78321 La Verrière (FR)
(72) Inventeur: Predeau, Serge, 86100 Chatellerault (FR); Boissac, Jean-Paul, 86100 Chatellerault (FR)

(56) Documents cités:
- EP-A- 0 685 657
- DE-A- 19 525 553

## Description

L'invention concerne un procédé d'assemblage d'un module d'équipement et d'un élément d'habillage sur un élément de structure d'un véhicule automobile.

L'invention concerne plus particulièrement un procédé d'assemblage d'un module d'équipement et d'un élément d'habillage sur un élément de structure d'un véhicule automobile, du type qui comporte une étape de fixation du module d'équipement sur une face de l'élément de structure et une étape de fixation de l'élément d'habillage sur ladite face.

Actuellement, le module d'équipement et l'élément d'habillage sont assemblés sur l'élément de structure du véhicule à des instants différents et indépendamment l'un de l'autre.

L'assemblage de chaque élément prend un certain temps, notamment en ce qui concerne leur positionnement par rapport à un élément de structure du véhicule, puis leur fixation. Le positionnement est en général réalisé par l'intermédiaire d'un robot de montage dont le bras doit effectuer un mouvement rapide de transfert de l'élément depuis un emplacement de stockage jusqu'au véhicule, puis un mouvement moins rapide pour le positionnement de l'élément par rapport à l'élément de structure.

Or, le module d'équipement et l'élément d'habillage sont chacun fixés sur le même élément de structure du véhicule. Ainsi, pour réduire la durée globale d'assemblage des deux éléments, il a été proposé de les assembler l'un avec l'autre puis de fixer l'ensemble ainsi formé sur l'élément de structure, comme montré dans la publication allemande DE, 195,25 553 A1, à partir de laquelle est établi le préambule de la revendication 7.

Cependant, l'élément d'équipement, qui est par exemple un motoréducteur pour l'entraînement d'un essuie-glace de hayon arrière, génère des vibrations et donc du bruit.

De manière connue, l'élément d'habillage permet d'isoler l'habitacle intérieur du bruit. Cependant, pour isoler efficacement l'habitacle du bruit généré par le motoréducteur, l'élément d'habillage doit être séparé du module d'équipement.

Afin de résoudre ce problème, l'invention propose un procédé du type décrit précédemment, caractérisé en ce qu'il comporte une étape initiale de solidarisation provisoire du module d'équipement avec l'élément d'habillage, et une étape de positionnement de l'ensemble ainsi formé par le module d'équipement et l'élément d'habillage, par rapport à l'élément de structure.

Selon d'autres caractéristiques de l'invention :
- le procédé comporte une étape de désolidarisation du module d'équipement d'avec l'élément d'habillage, postérieure à l'étape de positionnement ;
- l'étape de désolidarisation et l'étape de fixation du module d'équipement sur l'élément de structure sont simultanées ;
- l'étape de désolidarisation consiste à déplacer le module d'équipement par rapport à l'élément d'habillage suivant une direction globalement perpendiculaire à la face de l'élément de structure ;
- le procédé comporte successivement l'étape de solidarisation temporaire, l'étape de positionnement l'étape de fixation du module d'équipement sur l'élément de structure l'étape de désolidarisation et l'étape de fixation de l'élément d'habillage sur l'élément de structure ;
- l'étape de désolidarisation consiste à déplacer l'élément d'habillage par rapport au module d'équipement selon une direction sensiblement parallèle à la face de l'élément de structure.

L'invention propose aussi un agencement pour la fixation d'un module d'équipement et d'un élément d'habillage sur une face d'un élément de structure d'un véhicule automobile, pour la mise en oeuvre d'un procédé tel que décrit précédemment, du type dans lequel le module d'équipement est interposé entre ladite face de l'élément de structure et l'élément d'habillage, caractérisé en ce que le module d'équipement et l'élément d'habillage sont reliés par des moyens qui permettent une solidarisation provisoire du module d'équipement avec l'élément d'habillage, avant leur fixation sur l'élément de structure.

Selon d'autres caractéristiques de l'invention :
- le module d'équipement et l'élément d'habillage sont reliés par l'intermédiaire de moyens démontables de liaison par emboîtement élastique ;
- le module d'équipement et l'élément d'habillage sont reliés par l'intermédiaire d'au moins une pince élastique qui est apte à s'ouvrir pour permettre la désolidarisation du module d'équipement d'avec l'élément d'habillage ;
- la pince est portée par l'élément d'habillage ;
- la pince comporte une face d'appui d'un doigt associé du module d'équipement pour le positionnement du module d'équipement par rapport à l'élément d'habillage selon une direction sensiblement perpendiculaire à la face de l'élément de structure ;
- l'élément d'habillage porte au moins trois pinces qui coopèrent chacune avec un doigt complémentaire du module d'équipement pour le positionnement de l'élément d'entraînement sur l'élément d'habillage, dans un plan parallèle au plan de la face de l'élément de structure.

D'autres caractéristiques et avantages de l'invention apparaîtront à la lecture de la description détaillée qui suit pour la compréhension de laquelle on se reportera aux dessins annexés dans lesquels :
- les figures 1A à 1C sont des représentations schématiques en perspective d'un agencement conforme à l'invention qui représentent chacune une étape d'un procédé d'assemblage de l'agencement, conforme à un autre aspect de l'invention ;
- les figures 2A à 2C sont des vues en plan et de côté de l'agencement représenté aux figures 1A à 1C ;
- la figure 3A à 3D sont des vues similaires à celles des figures 1A à 1C d'un agencement conforme à une variante de l'invention ;
- les figures 4A à 4D sont des vues en plan et de dessus de l'agencement représenté à la figure 3 qui illustrent chacune une étape d'un procédé conforme à la variante de l'invention ;
- la figure 5 est un détail et à plus grande échelle d'un éclaté représentant des moyens de solidarisation provisoire conformes à la variante de réalisation de l'invention ; et
- la figure 6 est un détail à plus grande échelle et suivant un autre angle de vue de la patte de maintien représentée à la figure 5.

Pour la description de l'invention, on adoptera à titre non limitatif les orientations verticale, longitudinale et transversale selon le repère V, L, T indiqué aux figures.

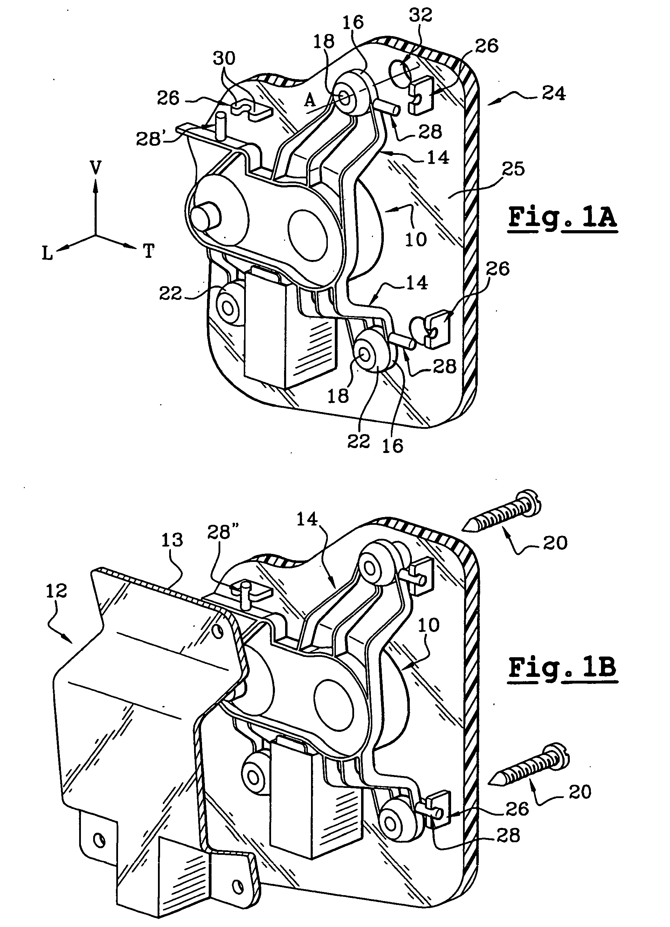

On adoptera aussi la direction d'arrière en avant comme étant la direction longitudinale et de droite à gauche en se reportant à la figure 1A.

Dans la description qui va suivre, des éléments identiques, similaires ou analogues seront désignés par les mêmes chiffres de référence.

On a représenté aux figures 1A à 1C un module d'équipement 10, qui est par exemple un motoréducteur pour l'entraînement d'un dispositif d'essuyage de la vitre d'un hayon arrière de véhicule automobile (non représentés). Le module d'équipement 10 est fixé sur une face verticale interne 13 d'un élément de structure 12 du hayon.

Pour sa fixation sur l'élément de structure 12, le module d'équipement 10 comporte des pattes de fixation 14, qui sont ici au nombre de trois, qui s'étendent chacune sensiblement dans un plan transversal vertical depuis le module d'équipement 10, et dont l'extrémité libre 16 de chaque patte de fixation 14 comporte un trou de passage 18 d'une vis de fixation 20 d'axe A longitudinal.

Lors de son fonctionnement, le module d'équipement 10 est susceptible de produire des vibrations qui, quand elles sont transmises à l'élément de structure 12, sont source d'un bruit souvent désagréable. C'est pourquoi, de manière connue, un amortisseur 22 ou "silent-bloc", qui est réalisé en un matériau élastomère, est interposé entre l'extrémité libre 16 de chaque patte 14 et la face interne 13 de l'élément de structure 12.

Le module d'équipement 10 est recouvert par un élément d'habillage 24, ou garniture qui est aussi fixé sur la face interne 13 de l'élément de structure 12 par exemple par emboîtement élastique.

Pour éviter que les vibrations produites par le module d'équipement 10 ne soient transmises à l'élément d'habillage 24, il faut que les deux élément soient chacun fixés sur l'élément de structure 12, mais que le module d'équipement 10 soit séparé ou isolé de l'élément d'habillage 24.

A cet effet, et conformément à l'invention, le module d'équipement 10 et l'élément d'habillage 24 comportent des moyens qui permettent de les solidariser provisoirement, en vue de leur positionnement simultané par rapport à l'élément de structure 12, puis de les désolidariser.

Ces moyens de solidarisation provisoire consistent en des pattes 26 qui s'étendent longitudinalement vers l'avant depuis une face externe 25 de l'élément d'habillage 24 qui est opposée à la face interne 13 de l'élément de structure 12, et chacune coopère avec un doigt 28 du module d'équipement 10 pour la solidarisation provisoire.

Chaque patte 26 consiste en une pince élastique 27 dont les deux branches 30 s'étendent longitudinalement vers l'avant, de sorte que la pince 27 s'ouvre, soit pour un emboîtement élastique des doigts 28 pour permettre la solidarisation du module d'équipement 10 avec l'élément d'habillage 24, soit pour libérer les doigts 28 pour permettre une désolidarisation du module d'équipement 10 d'avec l'élément d'habillage 24. L'emboîtement ou le déboîtement du module d'équipement 10 s'effectue par un déplacement longitudinal du module d'équipement 10 respectivement vers l'avant ou vers l'arrière.

Les doigts 28 sont de forme globalement cylindrique et chacun s'étend depuis le module d'équipement 10 dans un plan transversal parallèle à la face externe 25 de l'élément d'habillage 24.

Puisque le module d'équipement 10 et l'élément d'habillage 24 sont positionnés simultanément par rapport à l'élément de structure 12, les pattes 26 et les doigts 28 associés doivent aussi assurer un positionnement du module d'équipement 10 sur l'élément d'habillage 24.

A cet effet, les doigts 28 sont en appui longitudinalement contre le fond de la pince 27 associée, de sorte à positionner longitudinalement le module d'équipement 10.

De plus, les pattes 26 sont au nombre de trois, et au moins deux doigt 28 sont d'orientations générales différentes l'un de l'autre, ce qui permet de positionner le module d'équipement 10, verticalement et transversalement, et de l'orienter autour d'un axe longitudinal, c'est-à-dire dans un plan parallèle à la face externe 25 de l'élément d'habillage 24. Ici, deux doigts 28 sont parallèles à la direction transversale "T", et un troisième doigt 28' est sensiblement vertical.

Puisque le module d'équipement 10 et l'élément d'habillage 24 sont positionnés simultanément par rapport à l'élément de structure 12, et que le module d'équipement 10 est interposé entre l'élément d'habillage 24 et l'élément de structure 12, l'élément d'habillage peut gêner l'accès aux vis de fixation 20. Pour cela, l'élément d'habillage 24 comporte un trou d'accès 32, situé en regard de chaque trou de passage 18.

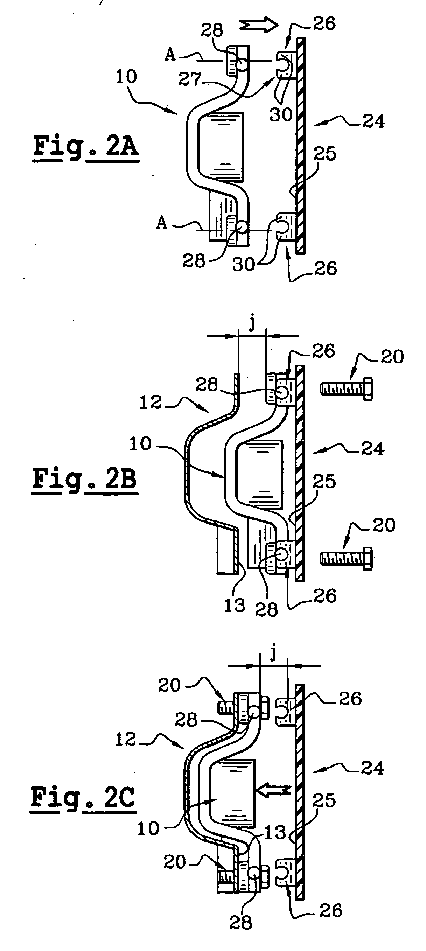

L'assemblage du module d'équipement 10 et de l'élément d'habillage 24 sur l'élément de structure 12 est réalisé selon un procédé conforme aux enseignements de l'invention, qui comporte une étape initiale, représentée aux figures 1A et 2A, de solidarisation provisoire du module d'équipement 10 avec l'élément d'habillage 24.

Cette étape de solidarisation provisoire consiste à emboîter les doigts 28 dans les pinces 27 associées par un déplacement longitudinal vers l'arrière de l'élément d'habillage 24 par rapport au module d'équipement 10.

Le procédé comporte une deuxième étape, représentée aux figures 1B et 2B, de positionnement de l'ensemble ainsi formé par le module d'équipement 10 et l'élément d'habillage 24, par rapport à l'élément de structure 12.

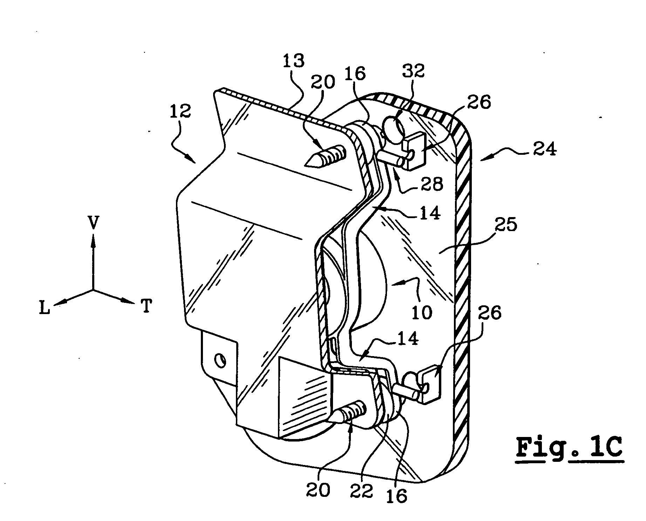

Enfin, le procédé comporte une troisième étape, représentée aux figures 1C et 2C, de fixation du module d'équipement 10 et de l'élément d'habillage 24 sur l'élément de structure 12.

Lorsque le module d'équipement 10 et l'élément d'habillage 24 sont positionnés par rapport à l'élément de structure 12, le module d'équipement 10 est distant de sa position finale de fixation sur la face interne 13 de l'élément d'habillage 12 avec un jeu longitudinal "j", tandis que l'élément d'habillage 24 est positionné longitudinalement dans sa position finale de fixation sur cette même face interne 13.

Du fait du jeu "j", lors du serrage des vis 20, le module d'équipement 10 se déplace longitudinalement vers l'avant par rapport à l'élément d'habillage 24, jusqu'à ce qu'il se désolidarise de l'élément d'habillage 24, c'est à dire jusqu'à ce que les doigts 28 ne coopèrent plus avec les pattes 26.

Ainsi, le procédé d'assemblage comporte aussi une étape de désolidarisation du module d'équipement 10 d'avec l'élément d'habillage 24, qui est simultanée avec la troisième étape de fixation.

Lors de l'étape de fixation l'élément d'habillage 24 n'est pas déplacé longitudinalement par rapport à l'élément de structure 12. Il en résulte que, après l'étape de fixation, le module d'équipement 10 et l'élément d'habillage 24 sont séparés par le jeu "j". La valeur du jeu "j" est plus ou moins importante selon les dimensions des pinces 27 et des doigts 28 associés, et l'espace entre le module d'équipement 10 et l'élément d'habillage 24 est inutilisé et il réduit le volume intérieur de l'habitacle du véhicule.

C'est pourquoi, selon une variante de l'invention, l'étape de désolidarisation consiste à déplacer transversalement l'élément d'habillage 24 par rapport au module d'équipement 10.

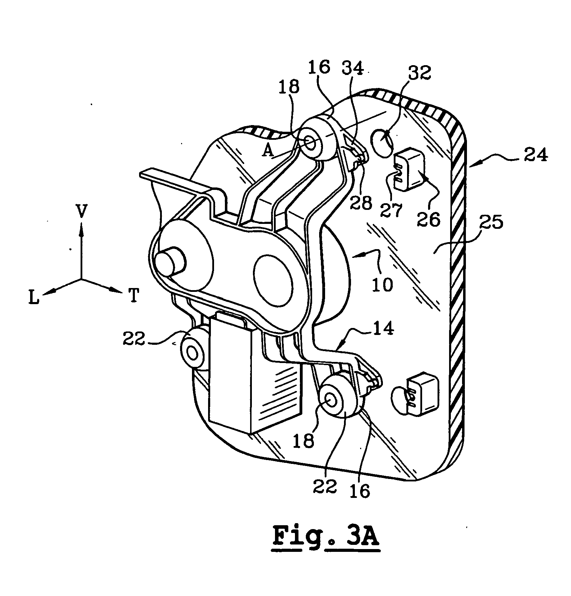

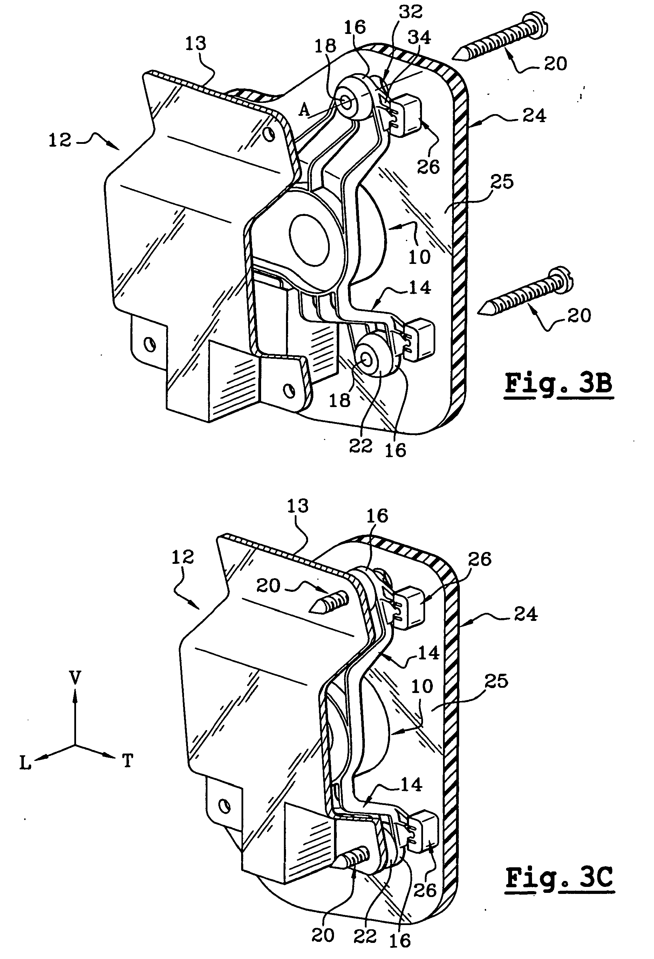

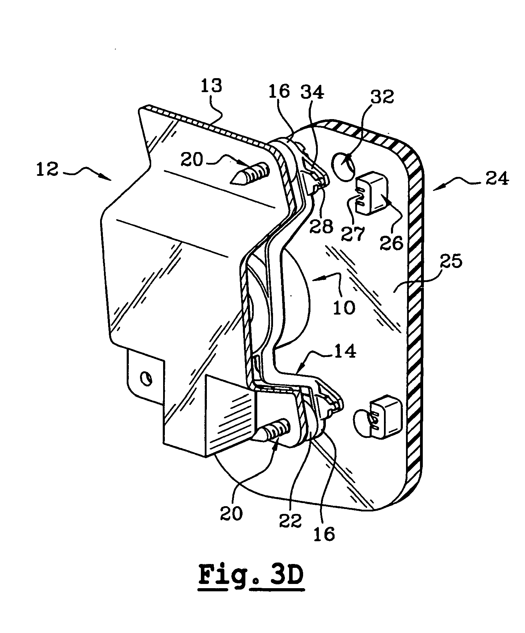

Selon cette variante, comme on l'a représenté aux figures 3 à 6, les branches 30 des pinces 27 s'étendent toutes transversalement vers la droite, et elles sont de préférence positionnées dans un même plan transversal parallèle à la face externe 25 de l'élément d'habillage 24.

Les doigts 28 sont d'orientation longitudinale, ce qui permet de positionner le module d'équipement 10 dans un plan parallèle à la face externe 25 de l'élément d'habillage 24.

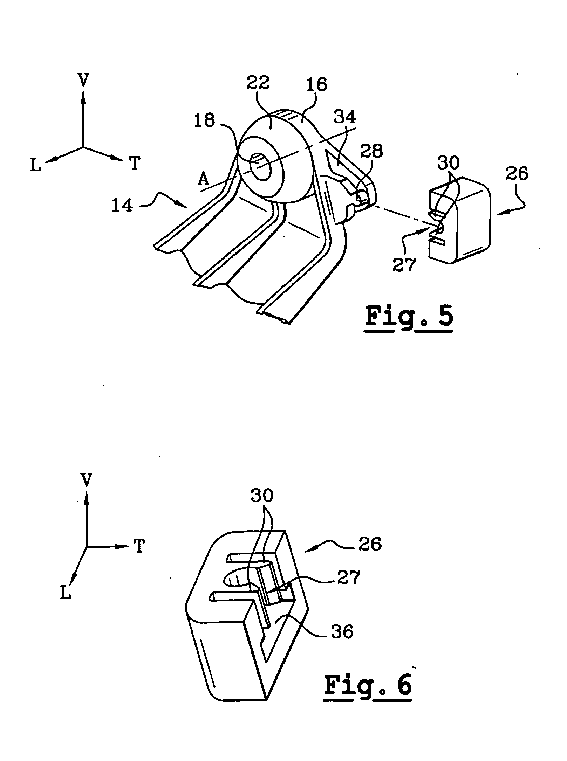

Pour positionner longitudinalement le module d'équipement 10 par rapport à l'élément d'habillage 24, comme on l'a représenté aux figures 5 et 6, l'extrémité longitudinale arrière de chaque doigt 28 est prolongée par une nervure plane 34 qui s'étend parallèlement à la face externe 25 de l'élément d'habillage 24, et dont la face d'extrémité longitudinale arrière 34a s'appuie contre une face transversale 36 de la patte 26 associée.

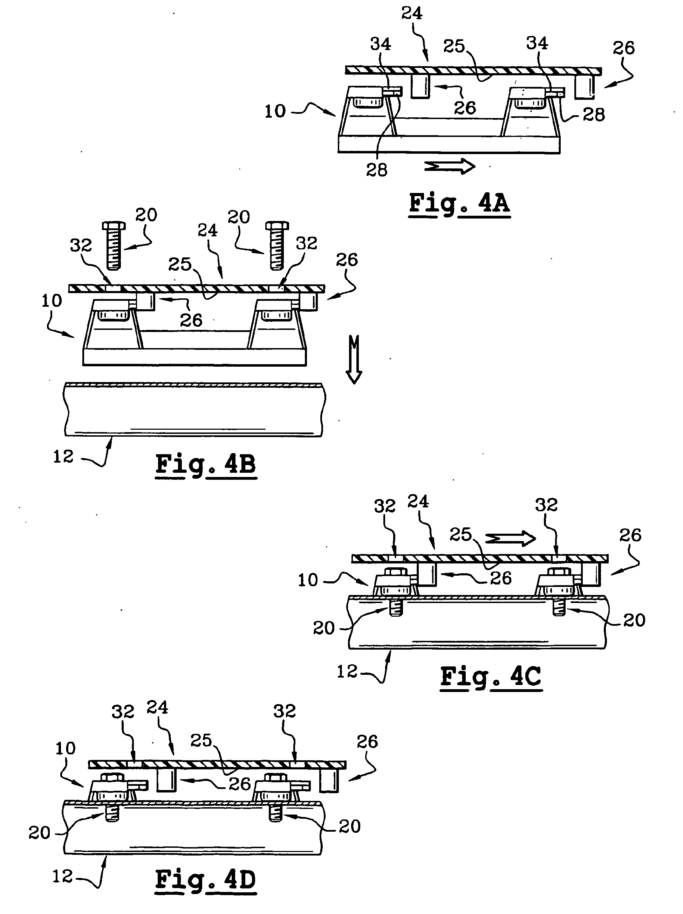

Conformément à cette variante de l'invention, le procédé d'assemblage comporte une première étape, représentée aux figures 3A et 4A, de solidarisation provisoire du module d'équipement 10 et de l'élément d'habillage 24. Cette première étape consiste à emboîter les doigts 28 dans les pinces 27 associées par un déplacement transversal vers la gauche de l'élément d'habillage 24 par rapport au module d'équipement 10.

Le procédé comporte une deuxième étape, représentée aux figures 3B et 4B, de positionnement de l'ensemble formé par le module d'essuyage 10 et l'élément d'habillage 24 par rapport à l'élément de structure 12, de sorte que le module d'équipement soit en appui sur la face interne 13 de l'élément de structure 12.

Le procédé comporte une troisième étape, représentée aux figures 3C et 4C, de fixation du module d'essuyage 10 sur l'élément de structure 12 par les vis de fixation 20.

Le procédé comporte une quatrième étape, représentée aux figures 3D et 4D, de désolidarisation de l'élément d'habillage 24 d'avec le module d'équipement 10 par un mouvement transversal vers la gauche par rapport au module d'équipement 10, de sorte que les doigts 28 ne sont plus reçus dans les pinces 27.

Ce déplacement transversal de l'élément d'habillage 24 permet aussi de le positionner par rapport à l'élément de structure 12.

Le procédé comporte une dernière étape, non représentée, de fixation de l'élément d'habillage 24 sur l'élément de structure 12.

Puisque l'étape de désolidarisation consiste en un mouvement transversal de l'élément d'habillage 24 par rapport au module d'équipement 10, la distance "d" qui sépare ces deux éléments peut être aussi réduite que possible, à la seule condition de ne pas gêner le mouvement de désolidarisation.

II est donc possible d'avoir une distance "d" nettement inférieure au jeu "j" qui sépare le module d'équipement 10 de l'élément d'habillage 24 conformément au premier mode de réalisation de l'invention.

II sera compris que des inversions mécaniques simples peuvent constituer des variantes de réalisation de l'invention. Par exemple, le module d'équipement 10 et l'élément d'habillage 24 sont solidarisés provisoirement par l'intermédiaire de pattes qui sont aptes à se rompre pour permettre la désolidarisation.

Grâce à un tel agencement, le module d'équipement 10 et l'élément d'habillage 24 arrivent simultanément sur la chaîne de montage du véhicule. Le risque de rupture de stock est ainsi réduit. Par ailleurs, la solidarisation du module d'équipement 10 et l'élément d'habillage 24 s'effectue indépendamment du montage du véhicule, ce qui permet de réduire le temps de montage, d'où un gain de productivité.

## Revendications

1. Procédé d'assemblage d'un module d'équipement (10) et d'un élément d'habillage (24) sur un élément de structure (12) d'un véhicule automobile, du type qui comporte une étape de fixation du module d'équipement (10) sur une face (13) de l'élément de structure (12) et une étape de fixation de l'élément d'habillage (24) sur ladite face (13),
**caractérisé en ce qu'**il comporte une étape initiale de solidarisation provisoire du module d'équipement (10) avec l'élément d'habillage (24), et une étape de positionnement de l'ensemble ainsi formé par le module d'équipement (10) et l'élément d'habillage (24), par rapport à l'élément de structure (12).

2. Procédé selon la revendication précédente, **caractérisé en ce qu'**il comporte une étape de désolidarisation du module d'équipement (10) d'avec l'élément d'habillage (24), postérieure à l'étape de positionnement.

3. Procédé selon la revendication précédente, **caractérisé en ce que** l'étape de désolidarisation et l'étape de fixation du module d'équipement (10) sur l'élément de structure (12) sont simultanées.

4. Procédé selon la revendication précédente, **caractérisé en ce que** l'étape de désolidarisation consiste à déplacer le module d'équipement (10) par rapport à l'élément d'habillage (24) suivant une direction globalement perpendiculaire à la face (13) de l'élément de structure (12).

5. Procédé selon l'une des revendications 1 ou 2, **caractérisé en ce qu'**il comporte successivement :
- l'étape de solidarisation temporaire ;
- l'étape de positionnement ;
- l'étape de fixation du module d'équipement (10) sur l'élément de structure (12) ;
- l'étape de désolidarisation ; et
- l'étape de fixation de l'élément d'habillage (24) sur l'élément de structure (12).

6. Procédé selon la revendication précédente, **caractérisé en ce que** l'étape de désolidarisation consiste à déplacer l'élément d'habillage (24) par rapport au module d'équipement (10) selon une direction sensiblement parallèle à la face (13) de l'élément de structure (12).

7. Agencement pour la fixation d'un module d'équipement (10) et d'un élément d'habillage (24) sur une face (13) d'un élément de structure (12) d'un véhicule automobile, pour la mise en oeuvre d'un procédé selon l'une quelconque des revendications précédentes, du type dans lequel le module d'équipement (10) est interposé entre ladite face (13) de l'élément de structure (12) et l'élément d'habillage (24),
**caractérisé en ce que** le module d'équipement (10) et l'élément d'habillage (24) sont reliés par des moyens (26, 27, 28) qui permettent une solidarisation provisoire du module d'équipement (10) avec l'élément d'habillage (24), avant leur fixation sur l'élément de structure (12).

8. Agencement selon la revendication précédente, **caractérisé en ce que** le module d'équipement (10) et l'élément d'habillage (24) sont reliés par l'intermédiaire de moyens (26, 27, 28) démontables de liaison par emboîtement élastique.

9. Agencement selon la revendication précédente, **caractérisé en ce que** le module d'équipement (10) et l'élément d'habillage (24) sont reliés par l'intermédiaire d'au moins une pince élastique (27) qui est apte à s'ouvrir pour permettre la désolidarisation du module d'équipement (10) d'avec l'élément d'habillage (24).

10. Agencement selon la revendication précédente, **caractérisé en ce que** la pince (27) est portée par l'élément d'habillage (24).

11. Agencement selon la revendication précédente, **caractérisé en ce que** la pince (27) comporte une face d'appui (36) d'un doigt (28) associé du module d'équipement (10) pour le positionnement du module d'équipement (10) par rapport à l'élément d'habillage (24) selon une direction sensiblement perpendiculaire à la face (13) de l'élément de structure (12).

12. Agencement selon l'une quelconque des revendications 9 à 11, **caractérisé en ce que** l'élément d'habillage (24) porte au moins trois pinces (27) qui coopèrent chacune avec un doigt complémentaire (28) du module d'équipement (10) pour le positionnement de l'élément d'entraînement sur l'élément d'habillage (24), dans un plan parallèle au plan de la face (13) de l'élément de structure (12).

## Patentansprüche

1. Verfahren zum Zusammenbau eines Ausrüstungsmoduls (10) und eines Verkleidungselements (24) auf einem Strukturelement (12) eines Kraftfahrzeugs, von dem Typ, der eine Befestigungsstufe des Ausrüstungsmoduls (10) auf einer Seite (13) des Strukturelements (12) und eine Befestigungsstufe des Verkleidungselements (24) auf der genannte Seite (13) umfasst,
**dadurch gekennzeichnet, dass** es eine anfängliche Stufe zur provisorischen festen Befestigung des Ausrüstungsmoduls (10) mit dem Verkleidungselement (24) und eine Positionierungsstufe der auf diese Weise durch das Ausrüstungsmodul (10) und das Verkleidungselement (24) gebildete Struktur im Verhältnis zum Strukturelement (12) umfasst.

2. Verfahren gemäß dem vorherigen Anspruch, **dadurch gekennzeichnet**, das es eine Lösungsstufe des Ausrüstungsmoduls (10) von dem Verkleidungsmodul (24) nach der Positionierungsstufe umfasst.

3. Verfahren gemäß dem vorherigen Anspruch, **dadurch gekennzeichnet, dass** die Lösungsstufe und die Befestigungsstufe des Ausrüstungsmoduls (10) auf dem Strukturelement (12) gleichzeitig sind.

4. Verfahren gemäß dem vorherigen Anspruch, **dadurch gekennzeichnet, dass** die Lösungsstufe in der Verschiebung des Ausrüstungsmoduls (10) im Verhältnis zum Verkleidungselement (24) gemäß einer global senkrechten Richtung zur Seite (13) des Strukturelements (12) besteht.

5. Verfahren gemäß Anspruch 1 oder 2, **dadurch gekennzeichnet, dass** es aufeinander folgend Folgendes umfasst:
- die vorübergehende Stufe zur festen Befestigung;
- die Positionierungsstufe;
- die Befestigungsstufe des Ausrüstungsmoduls (10) auf dem Strukturelement (12);
- die Lösungsstufe; und
- die Befestigungsstufe des Verkleidungselements (24) auf dem Strukturelement (12).

6. Verfahren gemäß dem vorherigen Anspruch, **dadurch gekennzeichnet, dass** die Lösungsstufe in der Verschiebung des Verkleidungselements (24) gegenüber dem Ausrüstungsmodul (12) gemäß einer zur Seite (13) des Strukturelements (12) deutlich parallelen Richtung besteht.

7. Anordnung für die Befestigung eines Ausrüstungsmoduls (10) und eines Verkleidungselements (24) auf einer Seite (13) eines Strukturelements (12) eines Kraftfahrzeugs für die Umsetzung eines Verfahrens gemäß einem der vorherigen Ansprüche von dem Typ, in dem das Ausrüstungsmodul (10) zwischen der genannten Seite (13) des Strukturelements (12) und des Verkleidungselements (24) zwischengeschaltet ist,
**dadurch gekennzeichnet, dass** das Ausrüstungselement (10) und das Verkleidungselement (24) durch Mittel (26, 27, 28) verbunden sind, die eine provisorische feste Befestigung des Ausrüstungsmoduls (10) mit dem Verkleidungselement (24) vor ihrer Befestigung auf dem Strukturelement (12) erlauben.

8. Anordnung gemäß dem vorherigen Anspruch, **dadurch gekennzeichnet, dass** das Ausrüstungsmodul (10) und das Verkleidungselement (24) über durch elastisches Verrasten abnehmbare Verbindungsmittel (26, 27, 28) verbunden sind.

9. Anordnung gemäß dem vorherigen Anspruch, **dadurch gekennzeichnet, dass** das Ausrüstungsmodul (10) und das Verkleidungsmodul (24) über wenigstens eine elastische Klemme (27) verbunden sind, die geeignet ist, sich zu öffnen, um die Lösung des Ausrüstungsmoduls (10) von dem Verkleidungselement (24) zu erlauben.

10. Anordnung gemäß dem vorherigen Anspruch, **dadurch gekennzeichnet, dass** die Klemme (27) durch das Verkleidungselement (24) getragen wird.

11. Anordnung gemäß dem vorherigen Anspruch, **dadurch gekennzeichnet, dass** die Klemme (27) eine Stützseite (36) eines dem Ausrüstungsmodul (10) zugeordneten Fingers (28) für die Positionierung des Ausrüstungsmoduls (10) im Verhältnis zum Verkleidungselement (24) gemäß einer zur Seite (13) des Strukturelements (12) deutlich senkrechten Richtung umfasst.

12. Anordnung gemäß Anspruch 9 bis 11, **dadurch gekennzeichnet, dass** das Verkleidungselement (24) wenigstens drei Klemmen (27) trägt, die jeweils mit einem komplementären Finger (28) des Ausrüstungsmoduls (10) zur Positionierung des Antriebselements auf dem Verkleidungselement (24) in einer zur Ebene der Seite (13) des Strukturelements (12) parallelen Ebene zusammenwirken.

## Claims

1. Method of assembling an equipment module (10) and a casing element (24) on a structural element (12) of a motor vehicle, of the type that comprises a step of fixing the equipment module (10) to a side (13) of the structural element (12) and a step of fixing the casing element (24) to said side (13),
**characterised in that** it comprises an initial step of temporarily attaching the equipment module (10) to the casing element (24), and a step of positioning the assembly thus formed by the equipment module (10) and the casing element (24) in relation to the structural element (12).

2. Method according to the preceding claim, **characterised in that** it comprises a step of separating the equipment module (10) from the casing element (24) following the positioning step.

3. Method according to the preceding claim, **characterised in that** the separating step and the step of fixing the equipment module (10) to the structural element (12) are simultaneous.

4. Method according to the preceding claim, **characterised in that** the separating step consists of moving the equipment module (10) in relation to the casing element (24) according to a direction that is globally perpendicular to the side (13) of the structural element (12).

5. Method according to either one of the claims 1 or 2, **characterised in that** it consecutively comprises the following:
- the step of temporary attachment;
- the positioning step;
- the step of fixing the equipment module (10) to the structural element (12);
- the separating step; and
- the step of fixing the casing element (24) to the structural element (12).

6. Method according to the preceding claim, **characterised in that** the separating step consists of moving the casing element (24) in relation to the equipment module (10) along a direction that is essentially parallel to the side (13) of the structural element (12).

7. Arrangement for fixing an equipment module (10) and a casing element (24) to the side (13) of a structural element (12) of a motor vehicle in order to implement a method according to any one of the preceding claims, of the type in which the equipment module is inserted between said side (13) of the structural element (12) and the casing element (24),
**characterised in that** the equipment module (10) and the casing element (24) are connected by means (26, 27, 28) that enable temporary attachment of the equipment module (10) to the casing element (24) before being fixed to the structural element (12).

8. Arrangement according to the preceding claim, **characterised in that** the equipment module (10) and the casing element (24) are connected by removable means (26, 27, 28) for linking by elastic fitting.

9. Arrangement according to the preceding claim, **characterised in that** the equipment module (10) and the casing element (24) are connected by means of at least one elastic clamp (27) which can open in order to allow the separation of the equipment module (10) from the casing element (24).

10. Arrangement according to the preceding claim, **characterised in that** the clamp (27) is supported by the casing element (24).

11. Arrangement according to the preceding claim, **characterised in that** the clamp (27) comprises a support face (36) of a finger (28) attached to the equipment module (10) in order to position the equipment module (10) in relation to the casing element (24) along a direction that is essentially perpendicular to the side (13) of the structural element (12).

12. Arrangement according to any one of the claims from 9 to 11, **characterised in that** the casing element (24) supports at least three clamps (27) that each cooperate with a complementary finger (28) of the equipment module (10) for positioning the driving element on the casing element (24) in a plane that is parallel to the side (13) of the structural element (12).
